# EUROPÄISCHE PATENTSCHRIFT

(11) **EP 3 904 936 B1**
(45) Veröffentlichungstag und Bekanntmachung des Hinweises auf die Patenterteilung: **31.07.2024**
(21) Anmeldenummer: 21171236.9
(22) Anmeldetag: 29.04.2021
(51) Int. Cl.: G02B 19/00, F21V 5/04, F21V 5/00, F21V 5/08, F21Y 115/10

(54) **OPTISCHER KÖRPER, LICHTMODUL UND LICHTSYSTEM**
OPTICAL BODY, LIGHT MODULE AND LIGHT SYSTEM
CORPS OPTIQUE, MODULE D'ÉCLAIRAGE ET SYSTÈME D'ÉCLAIRAGE

(30) Priorität: 29.04.2020 DE 102020111617
(43) Veröffentlichungstag der Anmeldung: 03.11.2021
(73) Patentinhaber: Trilux GmbH & Co. KG, 59759 Arnsberg (DE)
(72) Erfinder: Ganzer, Bernd, 58675 Hemer (DE)
(74) Vertreter: Lippert Stachow Patentanwälte Rechtsanwälte

(56) Entgegenhaltungen:
- EP-A1- 2 288 846
- EP-B1- 2 288 846
- DE-A1- 102011 078 653
- US-A1- 2011 038 151

## Beschreibung

Die Erfindung betrifft ein Lichtmodul zur Erzeugung einer vorgegebenen asymmetrischen Lichtverteilung umfassend ein Leuchtmittel sowie einen optischen Körper, insbesondere eine Linse sowie ein Lichtsystem umfassend mehrere derartiger Lichtmodule.

Beleuchtungssysteme werden grundsätzlich auf die jeweilige Beleuchtungsaufgabe angepasst. Zur optimalen Nutzung des von einem Leuchtmittel bereitgestellten Lichtes besteht dabei der Bedarf, das von dem Leuchtmittel abgegebene Licht möglichst voll umfänglich bzw. überwiegend für die Erzeugung einer gewünschten Lichtverteilung einzusetzen.

Die Offenlegungsschrift US 2011/0038151 A1 betrifft ein Beleuchtungssystem mit einem Rahmen, der eine Vielzahl von LEDs trägt, sowie ein jeweiliges optisches Element für jede LED, wobei jedes optische Element einen jeweiligen optischen Körper aufweist, der ausgewählt ist aus einer Gruppe von optischen Körpern, die eine jeweilige Anzahl von prismatischen Vorsprüngen aufweisen zum vertikalen Lenken des Lichtes mit einer hohen, mittleren oder niedrigen Wirkung in vertikaler Richtung, in dem der prismatischen Vorsprung bzw. die jeweiligen prismatischen Vorsprünge die Lichtstrahlen in einer vorbestimmten Weise brechen und reflektieren. Jeder der Optikkörper weist dabei einen primären Abschnitt zur Kollimierung des LED-Lichts und einen sekundären Abschnitt auf, dessen Vorsprung/Vorsprünge für die Lenkung der Lichtstrahlen in vertikaler und horizontaler Richtung ausgebildet sind. Die Offenlegungsschrift WO 2009/149559 A1 betrifft eine LED-Lampe mit einer Mehrzahl von auf einer Platte angeordneten LEDs, wobei jeder LED eine ausrichtbare Linse zugeordnet ist, die in der Art eines Primars ausgebildet ist, das zumindest eine totalreflektierende Grenzfläche und eine das Licht brechende Grenzfläche aufweist, über welche das Licht die jeweilige Linse verlässt. Die Offenlegungsschrift DE 10 2011 078 653 A1 betrifft eine Vorsatzoptik zur Bündelung von ausgesandtem Licht zumindest einer Halbleiterlichtquelle zum Einsatz in einem Lichtmodul eines Kraftfahrzeugscheinwerfers. Die Vorsatzoptik ist dabei so gestaltet, dass sie für das an einer Einkoppelfläche eingekoppelte Licht reflektierende Grenzflächen zur Reflexion zumindest eines Teils des eingekoppelten Lichts und mindestens eine Lichtauskoppelfläche umfasst zum Auskoppeln zumindest eines Teils des in die Vorsatzoptik eingekoppelten Lichts.

Der vorliegenden Erfindung liegt die Aufgabe zugrunde, ein Lichtmodul umfassend ein Leuchtmittel sowie eine Lichtlenkeinrichtung in Form eines optischen Körpers, insbesondere einer Linse, zur Erzeugung einer vorgegebenen asymmetrischen Lichtverteilung bereitzustellen, das gegenüber den bekannten Lichtmodulen eine verbesserte Anpassung der Lichtabgabe an eine vorgegebene Lichtverteilungsfunktion ermöglicht.

Diese Aufgabe wird mit einem Modul mit den Merkmalen von Anspruch 1 gelöst. Das vorgeschlagene Modul zur Erzeugung einer vorgegebenen asymmetrischen Lichtverteilung, weist ein Leuchtmittel sowie einen optischen Körper auf, der nachfolgend auch als Linse bezeichnet wird. Der optische Körper umfasst eine Lichteinkoppelseite mit zueinander verkippten Lichteinkoppelflächen zur Einkopplung von Licht eines Leuchtmittels, eine Lichtauskoppelseite mit zueinander gekippten Lichtauskoppelflächen zur Auskopplung von an der Lichteinkoppelseite eingekoppelten Lichtes, wobei die Lichteinkoppelflächen zumindest teilweise durch Begrenzungsflächen einer an der Lichteinkoppelseite des optischen Körpers angeordneten Ausnehmung bereitgestellt sind, wobei das Leuchtmittel an der Lichteinkoppelseite des optischen Körpers zur Einstrahlung von Licht in der Ausnehmung angeordnet ist und die Ausnehmung ausgebildet ist zum Aufnehmen von Lichtstrahlen des Leuchtmittels und um diese an den Lichteinkoppelflächen in den optischen Körper hineinzubrechen und wobei die Lichteinkoppelseite und die Lichtauskoppelseite durch eine vorgegebene gedachte Ebene in jeweils zwei Abschnitte aufgeteilt sind, die in zwei durch die Ebene getrennten Raumbereichen liegen und der optische Körper in einem ersten der beiden Abschnitte einen die Lichteinkoppelseite und die Lichtauskoppelseite verbindenden und zum Betrieb als zweifach totalreflektierend ausgebildeten Seitenflächenabschnitt aufweist, der an der Lichtauskoppelseite eine Außenseitenfläche eines aus der Lichtauskoppelfläche vorragenden bzw. herausragenden Vorsprungs darstellt, und wobei der Vorsprung eine zu dieser Außenseitenfläche gegenüber liegende Lichtauskoppelfläche zur Auskopplung von größtenteils zweifach totalreflektierten Licht aufweist, und die Lichtauskoppelfläche ausgebildet ist zum Brechen von auskoppelndem Licht in Richtung des zweiten Halbraums. Das erfindungsgemäße Modul ist dadurch gekennzeichnet, dass das Modul ferner eine trichterförmige, dem optischen Körper optisch nachgeschaltete Blendeneinrichtung aufweist, und die Blendeneinrichtung an der Lichtauskoppelseite des optischen Körpers angeordnet ist, und im Betrieb ein Teil des an der Lichteinkoppelseite des optischen Körpers eingekoppelten Lichts des Leuchtmittels an der zum Betrieb als zweifach totalreflektierend wirkend ausgebildeter Seitenflächenabschnitt zweifach totalreflektiert und zur Lichtauskoppelfläche des Vorsprungs gelenkt ist, die ausgebildet ist, dieses auskoppelnde Licht so brechen, dass das Licht über eine Begrenzungskante der Blendeneinrichtung hinaus in den zweiten Halbraum gelenkt ist.

Der Erfindung liegt die grundsätzliche Idee zugrunde, den optischen Körper im Bereich eines ersten Abschnittes in Bezug auf einen zwischen der Lichteinkoppelseite und der Lichtauskoppelseite angeordneten Seitenflächenabschnitt, der insbesondere einen optisch wirksamen Abschnitt des optischen Körpers seitlich begrenzt, so auszubilden, dass dieser als zweifach totalreflektierend wirkender Flächenabschnitt operiert. Hierzu ist ein an der Lichtauskoppelseite vorragender Vorsprung vorgesehen, der eine Außenseitenfläche als Teil der beschriebenen zweifach totalreflektierend wirkenden Seitenflächenabschnitt bereitstellt, wobei von dessen Außenseitenfläche Licht in Richtung einer den Vorsprung begrenzenden Lichtauskoppelfläche totalreflektiert wird, an welcher das Licht den Vorsprung und damit den optischen Körper verlässt und in Richtung des zweiten Raumbereichs gebrochen wird zur Bereitstellung der gewünschten asymmetrischen Lichtverteilung. Dabei kann die Blendeneinrichtung auch als Sicht- bzw. Blickschutz auf den optischen Körper ausgebildet und angeordnet sein.

Es sei bemerkt, dass die Angabe "Ausnehmung zur Aufnahme von Lichtstrahlen des Leuchtmittels" hier meint, dass das Leuchtmittel in die Ausnehmung einstrahlt, sodass Licht an den als Lichteinkoppelflächen wirkenden Begrenzungsflächen der Ausnehmung des optischen Körpers in diesen hineingebrochen wird. Die Angabe "Ausnehmung" ist allgemein zu verstehen und kann grundsätzlich eine Vertiefung in einer Oberfläche meinen zur Gestaltung von Lichteinkoppelbereichen, d.h. Flächenabschnitten, über welche Licht in den optischen Körper, insbesondere durch Brechung, einkoppelbar ist.

Weitere erfindungsgemäße Merkmale und Weiterbildungen der Erfindung sind in der nachfolgenden allgemeinen Beschreibung, den Figuren, der Figurenbeschreibung sowie den Unteransprüchen angegeben.

Um möglichst einen hohen Anteil des am zweifach totalreflektierend wirkend ausgebildeten Seiten- bzw. Außenseitenflächenabschnitt des optischen Körpers in Richtung des zweiten Halbraums umzulenken, kann vorgesehen sein, dass der Vorsprung aus der Lichtauskoppelseite des optischen Körpers erheblich herausragt, insbesondere mindestens um ein Viertel einer Dicke des optischen Körpers bezogen auf eine Abstandsrichtung zwischen Lichteinkoppelseite und Lichtauskoppelseite. In einer Ausführungsform kann der Vorsprung auch mindestens um ein Viertel, insbesondere mindestens ein Drittel dieser Dicke über die Lichtauskoppelseite herausragen. Zur Bereitstellung einer Homogenisierung des am Vorsprung ausgekoppelten Lichtes kann die Lichtauskoppelfläche des Vorsprungs, welche der Außenseitenfläche des Vorsprungs, insbesondere in einer Richtung zum zweiten Halbraum, gegenüberliegen kann, aufgeraut sein zur Bereitstellung einer Diffusorfunktionalität.

Zur Optimierung der Lichtlenkung an dem Seiten- bzw. Außenseitenflächenabschnitt des optischen Körpers, der zweifach totalreflektierend wirkend ausgebildet ist, kann dieser Seiten- bzw. Außenseitenflächenabschnitt oberflächenpoliert ausgebildet sein.

Grundsätzlich kann in der vorliegenden Patentanmeldung das Aufrauen oder Polieren einer optisch wirksamen Grenzfläche des optischen Körpers das jeweilige Bearbeiten, d.h. Aufrauen bzw. Polieren, einer der jeweiligen optisch wirksamen Fläche der Linse zugeordneten Oberfläche eines Werkzeuges, insbesondere eines Spritzgießwerkzeuges oder Extrusionswerkzeuges zur Herstellung der Linse meinen. Eine Aufrauhung, d.h. Satinierung einer Begrenzungsfläche des optischen Körpers bzw. einer dieser Begrenzungsfläche zugeordneten Werkzeugoberfläche ist z.B. durch Funkenerodieren der Werkzeugoberfläche realisierbar, wobei für den optischen Körper bzw. das betreffende Werkzeug zur Einstellung einer solchen Satinierung typischerweise Oberflächenvergleichsmuster nach VDI 3400 einsetzbar sind, z.B. nach VDI 3400 Ref 18 oder Ref 20. Für die Festlegung eines Polierstatus kann z.B. ein Mittenrauwert von Ra 0,025 um zweckmäßig sein.

Es sei darauf hingewiesen, dass mit der Angabe von Flächen des optischen Körpers bzw. der Linse optisch wirksame Begrenzungsflächen wie beispielsweise der zum Betrieb als zweifach totalreflektierend wirkend ausgebildete Seitenflächenabschnitt und/oder die Außenseitenfläche des Vorsprungs bezeichnet sind. Darüber hinaus kann der optische Körper je nach Ausführungsform auch noch andere Begrenzungsflächen, wie beispielsweise Haltestege oder einen Halterahmen definierende Oberflächen aufweisen, die im Unterschied zu den erstgenannten Flächen keine optische Wirkung bzw. Funktion aufweisen.

Um die Asymmetrie der Lichtlenkung des erfindungsgemäßen optischen Körpers, insbesondere der erfindungsgemäßen Linse weiter zu erhöhen, kann zweckmäßigerweise vorgesehen sein, dass der optische Körper im zweiten Abschnitt bzw. zweiten Halbraum einen die Lichteinkoppelseite und die Lichtauskoppelseite verbindenden und zum Betrieb als einfach totalreflektierend wirkend ausgebildeter Seitenflächenabschnitt aufweist, der ein Außenseitenflächenabschnitt sein kann, welcher ausgebildet ist, dass an diesem einfach totalreflektierte Licht auf eine zugeordnete Lichtauskoppelfläche der Lichtauskoppelseite zu lenken zur Auskopplung von einfach totalreflektiertem Licht und zum Brechen eines überwiegenden Anteils dieses Lichtes in den zweiten Halbraum. Dabei kann der zwischen der Lichteinkoppelseite und der Lichtauskoppelseite liegende Seitenflächenabschnitt als Außenseitenflächenabschnitt ausgebildet sein, welcher den optischen Körper bzw. den optisch wirkenden Bereich des Körpers im zweiten Abschnitt bzw. dem zweiten Raumbereich beschränkt.

Zur Bereitstellung einer Homogenisierung des an der zur Auskopplung des einfach totalreflektierten Lichtes ausgebildeten Lichtauskoppelfläche ausgekoppelten Lichtes, kann diese Lichtauskoppelfläche im zweiten Abschnitt bzw. zweiten Halbraum aufgeraut sein zur Realisierung einer Diffusorfunktionalität an dieser Lichtauskoppelfläche. Demgegenüber kann zur Optimierung der Lichtlenkung an dem Seiten- bzw. Außenseitenflächenabschnitt des optischen Körpers, der einfach totalreflektierend wirkend ausgebildet ist, dieser Abschnitt oberflächenpoliert ausgebildet sein.

Zur Bereitstellung des als zweifach totalreflektierend wirkend ausgebildeten Seitenflächenabschnitts des optischen Körpers im ersten Abschnitt kann vorgesehen sein, dass dieser im Bereich der Lichteinkoppelseite in einer Schnittebene senkrecht zur gedachten Ebene und senkrecht zu einer Längsrichtung einen Krümmungsradius aufweist, der geringer ist als der Krümmungsradius der Außenseitenfläche des Vorsprungs in dieser Schnittebene. Oder anders ausgedrückt, der als zweifach totalreflektierend wirkend ausgebildete Seitenflächenabschnitt im ersten Halbraum setzt sich aus zumindest zwei Bereichen bzw. Seitenflächen zusammen, wobei die Seitenfläche an der Lichteinkoppelseite einen geringeren Krümmungsradius in einer Schnittebene senkrecht zur gedachten Ebene aufweist, als die durch die Außenseitenfläche des Vorsprungs bereitgestellte Seitenfläche. Mit dieser Gestaltungsmaßnahme wird erreicht, dass Lichtstrahlen, welche im Bereich der Lichteinkoppelseite totalreflektiert werden, im Bereich des Vorsprungs an dessen Außenseitenfläche nochmals totalreflektiert werden mit dem Vorteil einer Umlenkung in Richtung auf den zweiten Halbraum zur Verbesserung der Asymmetrie der durch den erfindungsgemäßen optischen Körper bereitgestellten Lichtverteilung.

Um zu vermeiden, dass ein überwiegender Anteil des am als einfach totalreflektierend wirkend ausgebildeten Seitenflächenabschnitt abgelenkten Lichtes in den ersten Halbraum umgelenkt wird, kann zweckmäßigerweise vorgesehen sein, dass der Krümmungsradius des als einfach totalreflektierend wirkend ausgebildeten Seitenflächenabschnitts zumindest abschnittsweise geringer gehalten ist als der Krümmungsradius des als zweifach totalreflektierend wirkend ausgebildeten Seitenflächenabschnitts des optischen Körpers, insbesondere bezogen auf die im vorstehenden Absatz bezeichnete Schnittebene, welche senkrecht zu einer Längsrichtung des optischen Körpers liegen kann.

Um die Einkopplung des vom Leuchtmittel auf den optischen Körper einstrahlenden Lichtes in vorgegebener Weise bereitzustellen, kann zweckmäßigerweise vorgesehen sein, dass die Begrenzungsflächen der Ausnehmung Begrenzungsseitenflächen und Begrenzungsbodenflächen aufweisen, wobei eine erste, den zweifach totalreflektierend wirkenden Seitenflächenabschnitt als Lichteinkoppelfläche zugeordnete Begrenzungsseitenfläche der Ausnehmung und eine zweite, dem einfach totalreflektierend wirkenden Seitenflächenabschnitt als Lichteinkoppelfläche zugeordnete Begrenzungsseitenfläche der Ausnehmung vorgesehen ist. Dabei kann vorgesehen sein, dass die erste Seitenbegrenzungsfläche im ersten Abschnitt bzw. im ersten Raumbereich und die zweite Begrenzungsseitenfläche im zweiten Abschnitt bzw. im zweiten Raumbereich des optischen Körpers liegt und sich diese Flächen in Bezug auf die gedachte Ebene gegenüberliegen.

Es sei darauf hingewiesen, dass die Angabe "Seitenflächenabschnitt" bzw. "Begrenzungsseitenflächen" Flächen bzw. Flächenabschnitte meinen, die sich überwiegend in eine Richtung erstrecken, die parallel zu einer Längsrichtung des optischen Körpers verlaufen, wobei diese Längsrichtung in der gedachten Ebene liegt, während die Angabe "Begrenzungsbodenfläche" eine Fläche bezeichnen kann, die sich im Wesentlichen zwischen derartigen Seitenflächenabschnitten bzw. Begrenzungsseitenflächen erstrecken. Diese gedachte Ebene kann neben der Längsrichtung durch eine Verbindungsrichtung zwischen Lichteinkoppelseite und Lichtauskoppelseite des optischen Körpers bzw. der Linse (Dickenrichtung bzw. Vertikalrichtung in Einbaulage der Linse) bestimmt sein.

Um eine nochmals verstärkte Asymmetrie der Lichtverteilung der durch den erfindungsgemäßen optischen Körper verursachten Lichtlenkung bereitzustellen, kann vorgesehen sein, dass die Begrenzungsflächen der Ausnehmung zumindest eine als Lichteinkoppelfläche ausgebildete Begrenzungsbodenfläche aufweist, welche ausgebildet, an der zumindest einen Begrenzungsbodenfläche eingekoppeltes Licht mittels Brechung auf eine zugeordnete Lichtauskoppelfläche an der Lichtauskoppelseite zu lenken, von welcher Licht überwiegend in den zweiten, den Vorsprung des optischen Körpers nicht aufnehmenden Raumbereich gebrochen wird.

Insbesondere in solchen Fällen, in welchen die Lichtquelle in eine Transversalrichtung senkrecht zu einer Längsrichtung eine vorgegebene Ausdehnung aufweist, kann zweckmäßigerweise vorgesehen sein, dass die Begrenzungsflächen der Ausnehmung zumindest zwei als Lichteinkoppelflächen ausgebildete und zueinander verkippte Begrenzungsbodenflächen aufweisen, welche durch eine Verbindungsfläche miteinander verbunden sind und welche ausgebildet sind, an den zumindest zwei Begrenzungsbodenflächen in den optischen Körper eintretendes Lichts mittels Brechung auf eine zugeordnete Lichtauskoppelfläche an der Lichtauskoppelseite zu lenken, von welcher Licht überwiegend in den zweiten Raumbereich gebrochen wird.

Zur Bereitstellung einer Homogenisierung des an den Begrenzungsflächen der Ausnehmung in den optischen Körper eingekoppelten Lichtes, kann vorgesehen sein, wenigstens einige dieser Begrenzungsflächen zumindest abschnittsweise, insbesondere vollständig aufzurauen bzw. satiniert auszubilden zur Realisierung einer Diffusorfunktionalität an diesen Begrenzungsflächen, gleichbedeutend mit einer erhöhten Streuung an diesen Oberflächen. Insbesondere kann vorgesehen sein, die Begrenzungsseitenflächen und/oder die Begrenzungsbodenflächen der Ausnehmung wie beschrieben satiniert auszubilden zur Bereitstellung einer Diffusorfunktionalität an diesen Begrenzungsflächen.

Die grundsätzliche Gestalt des erfindungsgemäßen optischen Körpers bzw. der erfindungsgemäß gestalteten Linse kann je nach Ausführungsform unterschiedlich gestaltet sein. Beispielsweise kann der Körper langgestreckt ausgebildet sein mit einer Längserstreckung parallel oder gar einer Längserstreckung, die innerhalb der gedachten Ebene liegt zur Bereitstellung eines langgestreckten Lichtmoduls bzw. Leuchte. Dabei kann vorgesehen sein, dass der optische Körper als langgestreckter Extrusionskörper ausgebildet ist. Es kann jedoch erfindungsgemäß auch vorgesehen sein, dass der optische Körper eine Grundgestalt einer abgeflachten Kugel oder eines abgeflachten Ellipsoid-Körpers umfasst, wobei die Abflachung die Lichtauskoppelseite mit zugeordneten Lichtauskoppelflächen bereitstellen kann. Es sei darauf hingewiesen, dass die Angabe "kugel- bzw. ellipsoidförmig" breit auszulegen ist und eine Näherung an den jeweiligen mathematischen Körper darstellen kann.

In einer Ausführungsform, bei welcher die Lichtquelle eine vorgegebene Erstreckung in einer Längsrichtung aufweist, beispielsweise durch Aneinanderreihung einer Mehrzahl von LEDs kann zweckmäßigerweise vorgesehen sein, dass ein Profil der zumindest einen Begrenzungsbodenfläche, insbesondere der beiden Begrenzungsbodenflächen in einem Schnitt etwa senkrecht zur gedachten Ebene und senkrecht zur Längsrichtung über die überwiegende Erstreckung der Ausnehmung in Längsrichtung im Wesentlichen konstant ist. Dabei kann die vorgegebene Längsrichtung innerhalb der gedachten Ebene liegen. Vorzugsweise kann dabei vorgesehen sein, dass die zumindest eine Begrenzungsbodenfläche bzw. die zumindest zwei Begrenzungsbodenflächen über eine Längserstreckung der Ausnehmung eben ist bzw. sind. Zweckmäßigerweise kann vorgesehen sein, dass die zumindest eine Begrenzungsbodenfläche eine Ebene senkrecht zur gedachten Ebene und parallel zur Längsrichtung mit einem Winkel in einem Bereich zwischen 30 - 60°, insbesondere in einem Winkel von etwa 45° schneidet, derart, dass das an der bzw. den Begrenzungsbodenflächen in den optischen Körper eingekoppelte bzw. hineingebrochene Licht in Richtung zum zweiten Abschnitt gebrochen wird, um die gewünschte Asymmetrie der durch den optischen Körper erzeugten Lichtlenkung zu verstärken.

Die gewünschte Asymmetrie der Lichtverteilung kann weiter dadurch verstärkt werden, dass im Falle der zumindest beiden Begrenzungsbodenflächen zur Begrenzung der Ausnehmung an der Lichteinkoppelseite des optischen Körpers die Verbindungsfläche zwischen den beiden Begrenzungsbodenflächen in einem Schnitt etwa senkrecht durch die gedachte Ebene und senkrecht durch die Längsrichtung ein lokales Minimum und ein lokales Maximum bezüglich der Erstreckung der Ausnehmung in eine Dickenrichtung (Vertikalrichtung in Einbaulage) des optischen Körpers aufweist. Dabei kann diese Dickenrichtung die Richtung einer Verbindung der Lichteinkoppelseite und der Lichtauskoppelseite darstellen.

Zur Homogenisierung bzw. zur Erhöhung der Gleichförmigkeit der asymmetrischen Lichtverteilung in eine bzw. die Längsrichtung des optischen Körpers kann zweckmäßigerweise vorgesehen sein, dass die Außenseitenfläche und/oder die Lichtauskoppelfläche des Vorsprungs in einer Ebene insbesondere in Einbaulage in einer Horizontalebene, senkrecht zur gedachten Ebene, welche den optischen Körper in einen ersten und einen zweiten Abschnitt teilt, gekrümmt ausgebildet ist, insbesondere zur Strahlauffächerung in Längsrichtung des optischen Körpers. Diese Horizontalebene in Einbaulage des optischen Körpers kann parallel zur Längserstreckung des Körpers verlaufen.

In ähnlicher Weise kann vorgesehen sein, dass die Lichtauskoppelfläche des Vorsprungs in einer Ebene, insbesondere in Einbaulage in einer Vertikalebene, senkrecht zur gedachten Ebene gekrümmt ist zur Strahlauffächerung in Vertikalrichtung des optischen Körpers. Dabei kann diese Vertikalrichtung in Einbaulage der Richtung zur Angabe der Dicke des optischen Körpers entsprechen. Vorzugsweise kann zumindest eine der angegebenen Krümmungen, insbesondere die Krümmung der Außenseitenfläche und/oder der Lichtauskoppelfläche des Vorsprungs so ausgebildet sein, dass der bzw. die Krümmungsmittelpunkte im zweiten Raumbereich des optischen Körpers liegen.

Insbesondere in solchen Ausführungsformen, bei welchen die asymmetrische Lichtverteilung über eine vorgegebene Längserstreckung des optischen Körpers bereitgestellt werden soll, kann zweckmäßigerweise vorgesehen sein, dass sich der Vorsprung an der Lichtauskoppelseite des optischen Körpers in Längsrichtung über einen überwiegenden Anteil der Längserstreckung des optischen Körpers bzw. der Ausnehmung des optischen Körpers erstreckt. Insbesondere kann vorgesehen sein, dass der Vorsprung in Längsrichtung über zumindest zwei Drittel der optisch wirksamen Längserstreckung des optischen Körpers verläuft.

Um in Bezug auf Lichtanteile, welche an dem einfach totalreflektierend wirkenden Seitenflächenabschnitt und/oder an dem zumindest einen Begrenzungsbodenabschnitt gelenkte Licht in Bezug auf eine vorgegebene Längsrichtung eine Gleichförmigkeit in der asymmetrischen Lichtverteilung bereitzustellen, kann vorgesehen sein, dass die dem einfach totalreflektierend wirkenden Seitenflächenabschnitt zugeordnete Lichtauskoppelfläche, die dem zumindest einen Begrenzungsbodenabschnitt zugeordnete Lichtauskoppelfläche und/oder die den zumindest zwei Begrenzungsbodenabschnitten zugeordnete Lichtauskoppelflächen jeweils eine Oberflächenstrukturierung aufweisen. Dabei kann diese Oberflächenstrukturierung eine in Längsrichtung alternierend bzw. periodisch ausgebildete sein, beispielsweise in Form einer Wellenstruktur, wobei die Ausrichtung der Wellentäler bzw. Wellenberge im Wesentlichen senkrecht zur Längserstreckung verlaufen kann. In einer besonders zweckmäßigen Ausführungsform kann vorgesehen sein, dass diese Oberflächenstrukturierung eine Mehrzahl von in Längsrichtung aufeinanderfolgenden Zylinderoptiken umfasst, die an den jeweils zugeordneten Lichtauskoppelflächen angeformt sein können.

Die angegebene Oberflächenstrukturierung der dem einfach totalreflektierend wirkenden Seitenflächenabschnitt zugeordnete Lichtauskoppelfläche, die dem zumindest einen Begrenzungsbodenabschnitt zugeordnete Lichtauskoppelfläche und/oder die den zumindest zwei Begrenzungsbodenabschnitten zugeordnete Lichtauskoppelflächen können selbst wie obenstehend für diese Lichtauskoppelflächen beschrieben, satiniert ausgebildet sein, z.B. in Form einer satinierten Wellenstruktur oder satinierten, aufeinanderfolgenden Zylinderoptiken.

In einer besonders zweckmäßigen Ausführungsform kann vorgesehen sein, dass die dem einfach totalreflektierend wirkenden Seitenflächenabschnitt zugeordnete Lichtauskoppelfläche und die dem zumindest einen Begrenzungsbodenabschnitt zugeordnete Lichtauskoppelfläche oder die den zumindest zwei Begrenzungsbodenabschnitten zugeordneten Lichtauskoppelflächen eine im Wesentlichen einheitliche, gleichmäßig strukturierte Oberfläche des optischen Körpers an dessen Lichtauskoppelseite bilden, die in einer Verbindungsrichtung zum Verbinden der Lichteinkoppelseite und der Lichtauskoppelseite (Dickenrichtung, Vertikalrichtung in Einbaulage) durch den Vorsprung überragt ist. Beispielsweise kann vorgesehen sein, dass die Lichtauskoppelflächen des optischen Körpers an der Lichtauskoppelseite durch die Auskoppelfläche des Vorsprungs und eine einzelne, im Wesentlichen gleichmäßig strukturierte und verlaufende Oberfläche des optischen Körpers bereitgestellt ist, welche beispielsweise die obenstehend angegebene Oberflächenstrukturierung wie Zylinderoptiken aufweisen kann.

Zur Befestigung des optischen Körpers kann zweckmäßigerweise vorgesehen sein, dass der optische Körper einen umfänglichen Halteflansch aufweist, an den sich ein Halterahmen anschließt zum Halten des optischen Körpers an einem Träger oder einer Halteeinrichtung. Dieser Halteflansch des optischen Körpers kann dabei zur Abstützung einer Blendeneinrichtung, insbesondere eines trichterförmigen Blendenelements ausgebildet sein.

Zur Befestigung des optischen Körpers an Trägern und/oder Haltelementen kann zweckmäßigerweise vorgesehen sein, dass dieser einen radialen, insbesondere optisch nicht wirksamen Zwischenflansch aufweist, an dem sich ein wiederum optisch nicht wirksamer Halterahmen anschließt zum Halten des optischen Körpers an einem Träger. Der Zwischenflansch kann umlaufend zum optisch wirksamen Bereich des optischen Körpers ausgebildet sein.

Ein radial nach außen verlaufender Zwischenflansch ausgehend von optisch wirksamen Bereichen des optischen Körpers bzw. der Linse kann zweckmäßigerweise ausgebildet sein zur Bereitstellung einer Abstützfläche für einem Designelement wie einer Blendeneinrichtung oder Reflektoreinrichtung, insbesondere ein dem optischen Körper in Lichtrichtung nachgeschaltetes konusförmiges Blendenelement oder konusförmiges Reflektorelement.

Die Erfindung betrifft ferner ein Lichtmodul zur Erzeugung einer vorgegebenen asymmetrischen Lichtverteilung, umfassend ein Leuchtmittel, einen optischen Körper nach einem der obenstehend beschriebenen Ausführungsformen sowie ein insbesondere als Blendenelement ausgebildetes Designelement, wobei das Leuchtmittel an der Lichteinkoppelseite des optischen Körpers zur Einstrahlung von Licht in die Ausnehmung angeordnet ist und die Blendeneinrichtung an der Lichtauskoppelseite des optischen Körpers angeordnet ist und wobei im Betrieb ein Teil des an der Lichteinkoppelseite des optischen Körpers eingekoppelten Lichtes des Leuchtmittels an der zum Betrieb als zweifach totalreflektierend wirkend ausgebildeten Seitenflächenabschnitt zweifach totalreflektiert und zur Lichtauskoppelfläche des Vorsprungs gelenkt ist, wobei die Lichtauskoppelfläche des Vorsprungs ausgebildet ist, dieses Licht auskoppelnde Licht so zu brechen, dass es über eine Begrenzungskante der Blendeneinrichtung hinaus in den zweiten Halbraum gelenkt ist.

Je nach Ausführungsform kann die Designeinrichtung als Blendeneinrichtung ausgebildet sein, welche insbesondere als Sicht- bzw. Blickschutz auf den optischen Körper ausgebildet und angeordnet sein kann. In einer anderen Ausführungsform kann auch vorgesehen sein, die Designeinrichtung als Reflektoreinrichtung auszubilden, welche insofern eine Lichtlenkfunktionalität aufweist.

Als Leuchtmittel zur Gestaltung des erfindungsgemäßen Lichtmoduls sind unterschiedliche Lichtquellen im Rahmen der Erfindung möglich. Insbesondere kann das Leuchtmittel je nach Ausführungsform eine oder mehrere LEDs aufweisen, die beispielsweise in einer Ausführungsform in einer Reihenanordnung und ausgerichtet zu der Ausnehmung des optischen Körpers angeordnet sein können. Insbesondere kann vorgesehen sein, dass sich die Lichtquellen bzw. LEDs in die Ausnehmung des optischen Körpers hineinerstrecken. In einer Ausführungsform kann vorgesehen sein, ein Array von zumindest zwei LEDs in einer Längsrichtung und jeweils zwei LEDs in einer Querrichtung des optischen Körpers vorzusehen, wobei den LEDs in Querrichtung jeweils eine der obenstehend angegebenen Begrenzungsbodenflächen der Ausnehmung zugeordnet sein können, in welche sie jeweils überwiegend einstrahlen. Je nach Ausführungsform kann auch vorgesehen sein, in Längsrichtung weitere LEDs in der Reihenanordnung zu platzieren zur Vergrößerung der zu beleuchtenden Fläche mit einer asymmetrischen Lichtverteilung in Längsrichtung.

Es kann vorgesehen sein, dass das Leuchtmittel des erfindungsgemäßen Lichtmoduls Leuchtelemente mit unterschiedlicher spektraler Emission aufweist. Beispielsweise kann vorsehen sein, dass das Leuchtmittel Weißlicht-LED-Lichtquellen umfasst, die sich in Bezug auf ihre spektrale Emission unterscheiden. Dabei kann das erfindungsgemäße Lichtmodul ein Leuchtmittel umfassend mehrere, unterschiedliche Lichtquellen-Arten in Form von Weißlicht-LEDs aufweisen, d.h. LEDs, die Weißlicht mit unterschiedlicher Farbtemperatur emittieren, beispielsweise LEDs, die mit einer Farbtemperatur von kleiner 3500 K und LEDs die mit einer Farbtemperatur größer 4500 K abstrahlen. Insbesondere können zwei unterschiedliche Lichtquellen-Arten in Form von Weißlicht-LEDs als Leuchtmittel Verwendung finden, bei welchen die einen LEDs Weißlicht mit einer Farbtemperatur von etwa 2700 K und die anderen LEDs Weißlicht mit einer Farbtemperatur von etwa 6500 K abstrahlen. Zweckmäßigerweise können die LEDs so angeordnet sein, dass eine LED einer Lichtquellen-Art jeweils benachbart zu einer LED einer anderen Lichtquellen-Art angeordnet ist. Bei diesen Ausführungsformen mit unterschiedlichen Lichtquellen-Arten kann das Lichtmodul ausgebildet sein, durch unabhängiges Ansteuern bzw. Betreiben der Lichtquellen, beispielsweise von LEDs mit einer Farbtemperatur von 2700 K und LEDs mit einer Farbtemperatur von 6500 K, die Farbtemperatur des Mischlichts zu steuern, sodass die Farbtemperatur des abgegebenen Weißlichtes einstellbar sein kann. Auch in der obigen beschriebenen Ausführungsform, bei welcher ein Array von zumindest zwei LEDs in einer Längsrichtung und zwei LEDs in einer Querrichtung des optischen Körpers vorgesehen sind, wobei den LEDs in Querrichtung jeweils eine der obenstehend angegebenen Begrenzungsbodenflächen der Ausnehmung zugeordnet sein können, in welche sie jeweils überwiegend einstrahlen, können z.B. die Hälfte der LEDs einer Lichtquellen-Art und die andere Hälfte der LEDs einer anderen, insbesondere einer zweiten Lichtquellen-Art sein zur Bereitstellung eines einstellbaren Mischlichtes des erfindungsgemäßen Lichtmoduls.

Zweckmäßigerweise kann die Geometrie der Blendeneinrichtung an die optischen Eigenschaften des erfindungsgemäßen optischen Körpers angepasst sein. Insbesondere kann die Blendeneinrichtung trichterförmig aufgebaut sein, wobei sich die Lichteinkoppelseite des optischen Körpers im Bereich eines Bodenabschnitts der Blendeneinrichtung angeordnet sein kann und der Vorsprung des optischen Körpers zumindest zu einem Drittel einer Höhe (in Einbaulage in Vertikalrichtung) der trichterförmigen Blendeneinrichtung in diese hineinragt.

Es kann vorgesehen sein, dass der zum Betrieb als zweifach totalreflektierend wirkend ausgebildeter Seitenflächenabschnitt sowie die Lichtauskoppelfläche des Vorsprungs und die relative Anordnung des optischen Körpers zur Blendeneinrichtung so ausgebildet sind, dass das an der Lichtauskoppelfläche in Richtung des zweiten Halbraums gebrochene Licht überwiegend über einen Rand der Blendeneinrichtung hinaus gebrochen wird, sodass dieses Licht das wie beschrieben gestaltete optische Modul verlässt zur Bereitstellung der vorgegebenen asymmetrischen Lichtverteilung. Es kann vorgesehen sein, dass die dem einfach totalreflektierend wirkenden Seitenflächenabschnitt zugeordnete Lichtauskoppelfläche von einem dem optischen Körper zugewandten unteren Bereich der Blendeneinrichtung umgriffen ist.

Vorteilhafterweise kann eine Mehrzahl derartiger erfindungsgemäßer Lichtmodule, welche in Reihe oder als Array in einem vorgegebenen Raster angeordnet sein können, als Lichtsystem oder Leuchte angeordnet sein, wobei sich durch die Verwendung der erfindungsgemäßen Lichtmodule Leuchten bzw. Lichtsysteme beliebiger Größe zusammensetzen lassen.

Zweckmäßigerweise kann der erfindungsgemäße optische Körper aus einem transparenten Material, insbesondere PMMA oder PC hergestellt sein. Dabei kann auch vorgesehen sein, den optischen Körper nicht nur in Bezug auf seine optisch wirksamen Bereiche, sondern auch in Bezug auf eventuelle Halte-/oder Halterahmenabschnitte integral als Spritzgießteil herzustellen. Wie obenstehend beschrieben, kann in einer anderen Ausführungsform insbesondere bei einem langgestreckten optischen Körper vorgesehen sein, diesen als Extrusionskörper auszubilden.

Wie obenstehend erläutert, können zur Homogenisierung des von dem erfindungsgemäßen optischen Körper umgelenkten Lichtes dessen Lichteinkoppelflächen und/oder Lichtaustrittsflächen aufgeraut bzw. satiniert ausgebildet sein. Eine nochmals verbesserte Homogenisierung des von dem optischen Körper umgelenkten Lichtes kann dadurch bereitgestellt werden, dass bei der Herstellung der erfindungsgemäßen Linse in das transparente Formmaterial des Linsenkörpers kleinteilige, transparente Teilchen mit unterschiedlicher Brechzahl zum Brechungsindex des Formmaterials, insbesondere als kugelförmige Polymerpartikel, eingemischt werden. Im Resultat kann der erfindungsgemäß ausgebildete optische Körper dann im Volumen neben seiner transparenten Basis-Formmasse eingelagerte transparente Diffusions-Partikel aufweisen, wodurch im Innern der Linse eine weitere Homogenisierung des Lichtes erfolgen kann. Je nach Ausführungsform können diese Diffusions-Partikel in einer Matrix aus der Basis-Formmasse, beispielsweise PMMA oder PC, angeordnet sein. Diese optische Diffusorfunktionalität des optischen Körpers kann ohne starken Einfluss auf die Lichttransmissionseigenschaften des Körpers bereitgestellt werden, da die Homogenisierung des an den Begrenzungsflächen der Ausnehmung in den Körper eintretenden Lichtes durch Brechungsindexunterschiede innerhalb des Materials des Körpers verursacht sind, jedoch nicht durch Absorptionseffekte. Es versteht sich, dass bei der Gestaltung des optischen Körpers diese Diffusorfunktionalität im Innern des Körpers erfindungsgemäß vorteilhaft kombinierbar ist mit der obenstehend beschriebenen Aufrauhung bzw. Satinierung von Lichteinkoppel- und/oder Lichtaustrittsflächen des optischen Körpers.

Die Erfindung wird im Folgenden durch das Beschreiben einer erfindungsgemäß gestalteten Linse bzw. eines mit einer solchen Linse ausgestatteten Lichtmoduls nebst Abwandlungen unter Bezugnahme auf die beiliegenden Figuren erläutert, wobei
- Figur 1: eine erfindungsgemäße Leuchte in Form einer Reihenanordnung von erfindungsgemäßen Lichtmodulen in einer frontalen Aufsicht;
- Figur 2: in einer perspektivischen Aufsicht die Lichtmodule der Fig. 1 in einer Ausschnittdarstellung, wobei eines der Lichtmodule in einer vorgegebenen Ebene geschnitten ist,
- Figur 3: die Lichtmodule der Figur 2 in einer Blickrichtung frontal auf den Schnitt senkrecht zur Längserstreckung der Lichtmodule,
- Figur 4a) - c): eine symbolhafte Darstellung der Fig. 3 mit Angabe verschiedener Strahlenverläufe in einer erfindungsgemäß gestalteten optischen Linse;
- Figur 5: die Lichtmodulreihe der Figur 1 in einem Längsteilschnitt, und
- Figur 6: die Lichtmodulreihe der Figur 5 in einer schrägen Unteransicht, wobei der Leuchtmittelträger und teilweise die Leuchtmittel zur Klarheit der Darstellung weggelassen sind,
zeigt.

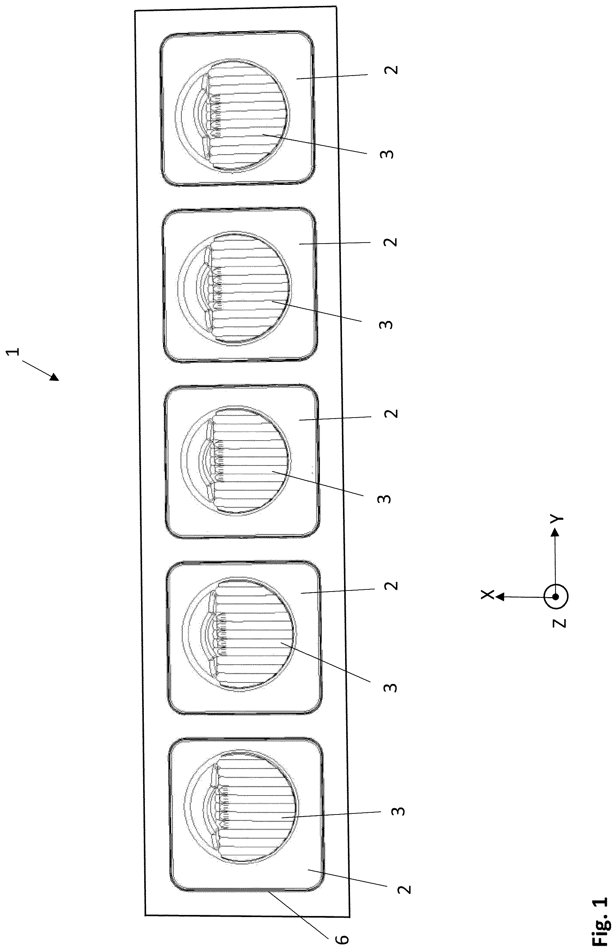

Figur 1 zeigt eine frontale Aufsicht auf eine Leuchte 1, welche eine Vielzahl, hier fünf, in Reihe angeordnete Lichtmodule 2 aufweist. Die Leuchte 1 bzw. jedes einzelne Lichtmodul 2 ist eingerichtet, eine asymmetrische Lichtverteilung bereitzustellen und kann beispielsweise als Deckenleuchte Verwendung finden, um eine, an einer zur Decke angrenzenden Wand angebrachte Tafel möglichst gleichförmig zu beleuchten. Jedes der Lichtmodule 2 kann eine in Figur 1 verdeckte Lichtquelle, beispielsweise in Form einer oder mehrerer LEDs aufweisen, deren Licht an einer in Figur 1 verdeckten Unterseite einer jeden Linse 3 in diese einkoppelbar ist. Die jeweilige erfindungsgemäß gestaltete Linse 3 ist ausgebildet, das von der Lichtquelle aufgenommene Licht zur Gestaltung der gewünschten asymmetrischen Lichtverteilung umzulenken und ist insofern hierzu spezifisch in Bezug auf ihre geometrische Form gestaltet.

In der beschriebenen Ausführungsform weist jedes Lichtmodul 2 ein der jeweiligen Linse 3 zugeordnetes und optisch nachgeschaltetes Blendenelement auf, wobei das zugeordnete Blendenelement trichterförmig ausgebildet ist. In der Ausführungsform der Figur 1 sind bei der Leuchte 1 der Figur 1 die einzelnen Blendenelemente für die hier fünf in Reihe angeordneten Lichtmodule 2 in einer integral hergestellten Blendenanordnung 6 zusammengefasst.

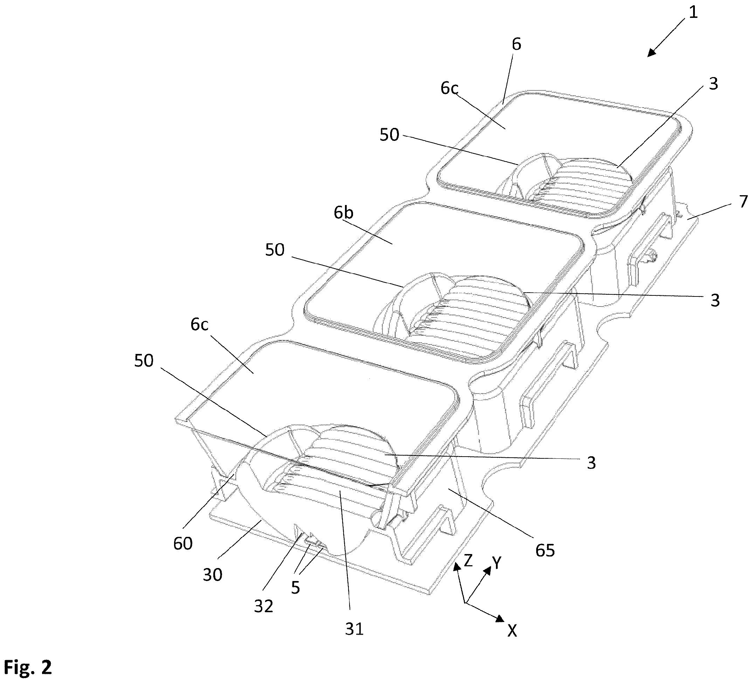

Figur 2 zeigt die Leuchte der Figur 1 in einer schrägen Aufsicht, wobei die Leuchte im Bereich des dritten Lichtmoduls geschnitten ist und die Schnittebene senkrecht zur Längsrichtung bzw. Reihenrichtung der Module 2, hier senkrecht zur Y-Richtung liegt. Die Leuchte 1 kann eine Grundplatte 7 aufweisen, an welcher das jeweilige Leuchtmittel angebracht sein kann. In der beschriebenen Ausführungsform kann die Grundplatte als Platine ausgebildet sein, auf welcher das jeweils einem Lichtmodul 2 zugeordnete Leuchtmittel, hier in Form zumindest einer LED 5, verschaltet sein kann. Die Grundplatte 7 kann in ähnlicher Weise wie die Blendenanordnung 6 eine Mehrzahl von Plattenabschnitten 7a bis 7c umfassen, welche jeweils einem einzelnen Lichtmodul 2, umfassend eine Linse 3 sowie einen Blendenabschnitt 6a bis 6c zugeordnet bzw. Teil eines solchen einzelnen Lichtmoduls ist. Insbesondere in solchen Ausführungsformen, bei welchen mehrere derartige Lichtmodule in Reihe und/oder einem vorgegebenen zweidimensionalen Raster angeordnet sind, kann vorgesehen sein, die Grundplatte 7 und/oder die Blendenanordnung 6 mit einer Mehrzahl von jeweils einem Modul zugeordneten Abschnitten als einstückiges Bauteil bereitzustellen. Im Rahmen der Erfindung kann jedoch auch vorgesehen sein, dass eine Leuchte nur einen einzelnen, hier noch zu beschreibenden optischen Körper bzw. eine Linse mit zugeordneter, dem Linsenkörper optisch nachgeschalteten Designelement, insbesondere in Form einer Blendeneinrichtung umfasst.

Erfindungsgemäß weist der Leuchtenkörper 3 eine dem Leuchtmittel 5 zugewandte Lichteinkoppelseite 30 und eine dem Leuchtmittel 5 abgewandte Lichtauskoppelseite 31 auf. Die Linse 3 weist an ihrer Lichteinkoppelseite 30 eine Ausnehmung 32 auf, die ausgebildet ist zur Bereitstellung von Lichteinkoppelflächen, an welchen das von dem Leuchtmittel 5 abgegebene Licht in den Körper der Linse 3 hineingebrochen wird. Demgegenüber weist die Lichtauskoppelseite 31 der Linse 3 eine Mehrzahl von Lichtauskoppelflächen auf, an welchen das an der Lichteinkoppelseite 30 eingekoppelte Licht die Linse 3 wieder verlässt. Die Gestaltung der Lichtauskoppelseite der Linse 3 wird untenstehend im Detail erläutert. Figur 2 zeigt, dass die Lichtauskoppelseite 31 der Linse in der beschriebenen Ausführungsform einen optisch wirksamen Vorsprung 50 umfasst, der sich über die weiteren Abschnitte der Lichtauskoppelseite 31 hinauserstreckt, vorliegend in eine Richtung, welche die Lichteinkoppelseite und die Lichtauskoppelseite der Linse verbindet und in Bezug auf das in Figur 2 angegebene Koordinatensystem in Z-Richtung liegt. Der jeweilige Vorsprung 50 weist einen in einer Längsrichtung Y etwa dreieckigen ausgebildeten Querschnitt auf, wobei Begrenzungsflächen des Vorsprungs gekrümmt verlaufen.

Wie aus Figur 2 ferner hervorgeht, weisen die jeweiligen optischen Körper 3 einen sich von optisch wirksamen Abschnitten der Linse radial nach außen erstreckenden, umlaufenden Halteflansch 60 auf, der in einen Halterahmen 65 übergeht. Es kann vorgesehen sein, den optischen Körper bzw. die Linse zusammen mit dem Halteflansch 60 und dem Tragrahmen 65 integral auszuführen, beispielsweise aus einem transparenten Material wie PMMA oder PC.

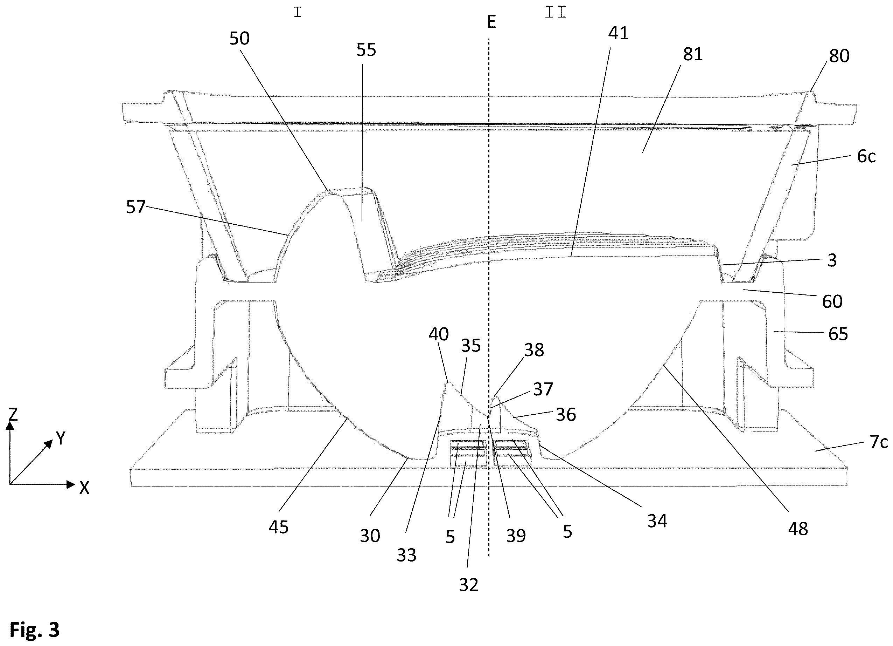

Figur 3 zeigt die Leuchte der Figur 2 in einer frontalen Stirnansicht auf den Schnitt senkrecht zur Längsachse (Y-Achse) des in Figur 2 angegebenen Schnittes durch eines der Module 2. In der beschriebenen Ausführungsform kann jedes Modul vier LEDs aufweisen, die auf der Grundplatte 7 bzw. dem Plattenabschnitt 7c verschaltet sind, wobei die LEDs in einer symmetrischen 2 x 2 - Anordnung platziert sein können mit einer Ausrichtung in Längsrichtung (Y) und in Querrichtung (X) zur Längsrichtung. Die LEDs können sich n der beschriebenen Ausführungsform in die Ausnehmung 32 zumindest abschnittsweise, insbesondere vollständig, hineinerstrecken, da der optische Körper 3 an seiner Lichteinkoppelseite 30 auf der Grundplatte 7 bzw. 7c aufliegt. Es kann jedoch auch vorgesehen sein, dass das Leuchtmittel vor der Ausnehmung angeordnet ist und in die Ausnehmung einstrahlt. In der Schnittdarstellung der Figur 3 wird die Ausnehmung 32 durch Begrenzungsflächengebildet. Zum einen durch sich im Wesentlichen in eine Richtung zwischen Lichteinkoppelseite 30 und Lichtauskoppelseite 31 des optischen Körpers erstreckende Begrenzungsseitenflächen 33, 34, wobei sich diese Flächen etwa gegenüberliegen können. Darüber hinaus wird die Ausnehmung 32 durch sich in einer hierzu etwa senkrechten Richtung erstreckenden Begrenzungsbodenflächen 35, 36, 37 gebildet in dem in Figur 3 gezeigten Schnitt. Dabei können die Begrenzungsseitenflächen 33, 34 und/oder die Begrenzungsbodenflächen 35, 36, 37 im Wesentlichen parallel zur Längserstreckung des optischen Körpers (Y-Richtung) verlaufen, sodass die Ausnehmung 32 eines jeweiligen optischen Körpers 3 über deren Längserstreckung die in Figur 3 angegebene Gestalt aufweist. Insofern können in dieser Ausführungsform die Verbindungskanten 38, 39, 40 der Begrenzungsflächen 33 bis 37 im Wesentlichen parallel zur Längserstreckung Y verlaufen.

Erkennbar weist in der beschriebenen Ausführungsform die Verbindungskante 40 die größte Höhe der Ausnehmung 32 auf, während die Verbindungskanten 38, 39 lokale Maxima bzw. Minima in der Erstreckung der Ausnehmung (Höhe) darstellen. Die angegebenen Begrenzungsseitenflächen und Begrenzungsbodenflächen der Ausnehmung 32 stellen Lichteinkoppelflächen bereit, über welche das Licht der Leuchtmittel 5 in den optischen Körper 3 mittels Brechung einkoppelbar ist.

In der beschriebenen Ausführungsform ist der optische Körper bzw. das Lichtmodul 2 durch eine gedachte Ebene E, die parallel zur Längserstreckung (Y-Achse der Darstellung) und etwa in der in Figur 3 angegebenen Schnittdarstellung etwa mittig durch den optischen Körper 3 verläuft, in zwei Abschnitte I, II aufteilt, wobei die beiden Abschnitte in zwei durch die eine Ebene E getrennte Raumbereichen liegen. Diese Ebene kann vorzugsweise etwa parallel zur Begrenzungsbodenfläche 37 verlaufen, welche die beiden an jeweils eine Seitenbegrenzungsfläche angrenzenden Begrenzungsbodenflächen 35, 36 verbindet. Da diese Ebene parallel zur Längsrichtung des optischen Körpers bzw. der Lichtmodule verläuft, sind entsprechend auch die LED-Reihen in der beschriebenen Ausführungsform hierzu ausgerichtet.

In der in Figur 3 angegebenen Schnittdarstellung ist ferner dargestellt, dass der den optisch wirksamen Teil der Linse 3 umgebende Halteflansch 60 integral mit dem Linsenkörper und einem Halterahmen 65 verbunden ist, der sich stirnseitig an der Platte 7 bzw. dem hier sichtbaren Plattenabschnitt 7c abstützt. Der Flansch 60 trägt an seiner der Grundplatte 7 abgewandten Außenfläche den hier trichter- bzw. konusförmig gestalteten und sich weg von der Linse 3 öffnenden Blendenabschnitt bzw. die Blende 6c. Diese weist in Höhen- bzw. Dickenrichtung (Z-Achse) der Linse 3 durch eine umlaufende Kante 80 eine Grenze auf, über welche das Licht durch die Linse 3 abgelenkt werden muss, damit dieses den durch die Blende 6c gebildeten Raumabschnitt verlassen kann. In der beschriebenen Ausführungsform kann die innenseitige Oberfläche 81 der Blende bzw. des Blendenabschnitts 6c aus einem das auftreffende Licht absorbierend und/oder streuend ausgebildet sein. In einer weiteren Ausführungsform kann auch vorgesehen sein, die Oberfläche 81 der Blende reflektierend, d.h. das Designelement als Reflektor auszubilden.

In der beschriebenen Ausführungsform kann der optische Körper 3 eine im Schnitt der Figur 3 in Quererstreckung (X-Richtung) im Wesentlichen geradlinige, leicht in Richtung zur Lichteintrittsseite gekrümmte, als Lichtauskoppelfläche 41 ausgebildete Oberfläche aufweisen, wobei die Krümmung in Richtung zum Vorsprung 50 zunehmen kann. In der beschriebenen Ausführungsform kann die Lichtauskoppelfläche 41 in Längsrichtung eine zylinderförmige Rippenstrukturierung aufweisen, siehe Figur 2, auf die untenstehend noch näher Bezug genommen wird. Neben der Lichtauskoppelfläche 41 weist der optische Körper 3 an seiner Lichtauskoppelseite mit der der erstgenannten Lichtauskoppelfläche 41 zugewandten Begrenzungsfläche des Vorsprungs 50 eine weitere Lichtauskoppelfläche 55 auf. Wie insbesondere aus Figur 2 ersichtlich, stellt die Lichtauskoppelfläche 55 eine in einem Winkel im Bereich zwischen 70 bis 120° zur erstgenannten Lichtauskoppelfläche 41 verlaufende gekrümmte Fläche auf, wobei der Krümmungsradius des Begrenzungsfläche 55 des im Abschnitt 1 angeordneten Vorsprungs 50 im zweiten Abschnitt II und etwa in einer Ebene liegt, welche die Längsrichtung Y umfasst und etwa senkrecht auf der gedachten Ebene E liegt.

In der beschriebenen Ausführungsform ist der optische Körper 3 in Bezug auf seine Seitenflächen 45, 57 und 48, d.h. in Bezug auf insbesondere seine Außenseitenflächen, welche die Lichteinkoppelseite und die Lichtauskoppelseite verbinden so ausgebildet, dass das an den Lichteinkoppelflächen der Ausnehmung 32 in die Linse eintretende Licht so auf die Lichtauskoppelflächen 41, 55 gelenkt wird, dass es von diesen überwiegend in Richtung des zweiten Halbraumes II gebrochen wird zur Erzeugung der gewünschten asymmetrischen Lichtverteilung. Hierzu sind die zwischen Lichteinkoppelseite und Lichtauskoppelseite angeordneten Seitenflächen 45, 57 bzw. 48 als totalreflektierende Flächen ausgebildet, welche das reflektierte Licht auf zugeordnete Lichtauskoppelflächen 55, 41 lenken, von welchen dieses zum überwiegenden Anteil in den zweiten Raumbereich II gebrochen wird. Dabei ist die in der Figur 3 im Schnitt links angegebene und als Lichteinkoppelfläche wirkende Begrenzungsseitenfläche 33 der Ausnehmung 32 der doppelt totalreflektierenden Seitenfläche 45, 57 zugeordnet, von welcher zumindest ein überwiegender Anteil des über die Lichteintrittsfläche 33 eingekoppelten Lichts doppelt, d.h. zweifach totalreflektiert wird, insbesondere zunächst an der der Lichteinkoppelseite nächstgelegene Seitenfläche 34 und dann an der der Lichtauskoppelseite nächstgelegenen Seitenfläche 57, wobei letztere in der beschriebenen Ausführungsform eine äußere Grenzfläche des Vorsprungs 50 darstellt. Dabei wird das doppelt totalreflektierte Licht auf die Innenseite der Lichtauskoppelfläche 55 des Vorsprungs gelenkt, von welcher das Licht den optischen Körper 3 verlässt, wobei die relative Anordnung der Leuchtmittel 5 zur Lichteinkoppelfläche 33, die Gestaltung der doppelt reflektierenden Seitenflächen 45, 57 sowie die zugeordnete Lichtauskoppelfläche 55 derart aufeinander eingestellt und ausgebildet sind, dass das an der Lichtauskoppelfläche 55 herausgebrochene Licht überwiegend in den zweiten Raumbereich und darüber hinaus über die Kante 80 der Blende gelenkt ist. In ähnlicher Weise ist die in der Schnittdarstellung der Figur 3 zur Begrenzungsseitenfläche 33 gegenüberliegend ausgebildete Begrenzungsseitenfläche 34 und die sich daran anschließende einfach totalreflektierende Seitenfläche 48 ausgebildet, das über die Lichteintrittsfläche 34 in den optischen Körper eintretende Licht der Leuchtmittel an der Grenzfläche der einfach totalreflektierenden Seitenfläche 48 in Richtung auf die Lichtauskoppelfläche 41 zu lenken, von welcher das Licht zu einem überwiegenden Anteil in Richtung des zweiten Halbraums II und über die Kante 80 gelenkt ist.

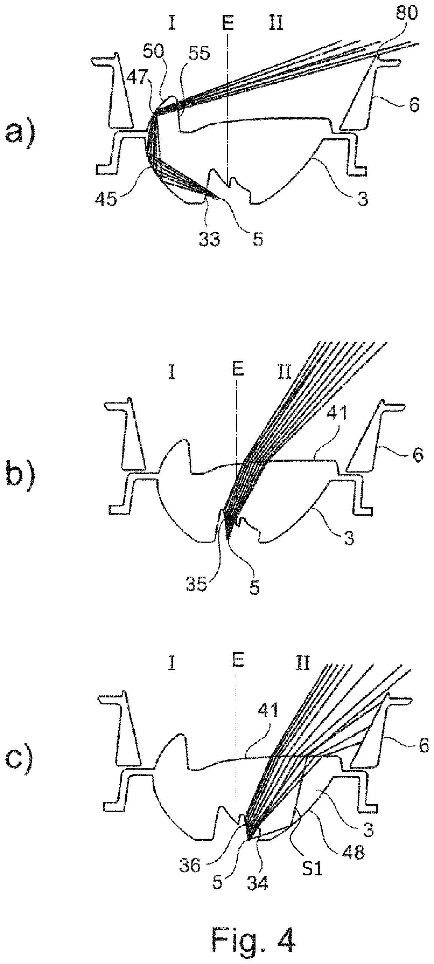

In den Figuren 4a bis 4c sind jeweils in einer symbolhaften Schnittdarstellung entsprechend der Darstellung der Figur 3 für in die Lichteinkoppelflächen 33, 35, 34 und 36 eintretende Lichtstrahlen charakteristische Strahlenverläufe dargestellt. Figur 4a zeigt den beispielhaften Transmissionsverlauf für eine Mehrzahl von, von einem Emissionsort eines der Leuchtmittel 5 ausgehenden Lichtstrahlen, die über die Begrenzungsseitenfläche 33 in den Körper der Linse 3 eintreten, und nachfolgend zunächst an der doppelt total reflektierenden Seitenfläche 45, 47 insgesamt zweimal mittels Totalreflektion umgelenkt und auf die Lichtaustrittsfläche 55 des Vorsprungs 50 gelenkt werden. Erkennbar werden die ursprünglich in Richtung des ersten Halbraums abgehenden Lichtstrahlen in den zweiten Halbraum umgelenkt, wobei darüber hinaus das Licht über die umlaufende Kante 80 der Blende 6 gelenkt wird, sodass das Licht das Lichtmodul bzw. die Leuchte zur asymmetrischen Beleuchtung einer beispielhaften Arbeitsfläche verlassen kann. Dabei sind die in Dickenrichtung der Linse 3 (Z-Richtung, siehe Fig. 3) aufeinanderfolgenden, gekrümmten Seitenflächen 45 und 47 derart ausgebildet, dass für einen Teil, insbesondere einen überwiegenden Teil des über die Lichteintrittsfläche 33 eingekoppelten Lichtes zunächst eine Totalreflexion an der der Lichteintrittsseite zugewandten Seitenfläche 45 total reflektiert und das Licht danach auf die äußere Seitenfläche 47 des Vorsprungs 50 gelenkt wird, dort wiederum total reflektiert und auf die Lichtaustrittsfläche 55 des Vorsprungs 50 gelenkt wird, an welcher es die Linse 3 gerichtet in den zweiten Halbraum II verlässt.

Figur 4b zeigt den beispielhaften Strahlenverlauf ausgehend von einem Leuchtmittel 5, wobei diese Lichtstrahlen auf die als Lichteintrittsfläche wirkende Begrenzungsbodenfläche 35 fallen, dort in die Linse 3 hineingebrochen werden und auf die Lichtaustrittsfläche 41 der Linse fallen, von welcher die eingezeichneten beispielhaften Lichtstrahlen, wiederum in den zweiten Halbraum II gerichtet, die Linse 3 verlassen.

Figur 4c zeigt typische Strahlenverläufe von Licht, das auf die als Lichteintrittsfläche wirkende Bodenbegrenzungsfläche 36 fällt, dort in den Linsenkörper 3 hineingebrochen und an der Lichtaustrittsfläche 41 auf der Lichtaustrittsseite in den zweiten Halbraum II gelenkt wird. In der beschriebenen Ausführungsform fällt ein geringer Anteil der dargestellten Lichtstrahlen auf die Innenfläche der Blende 6 und wird insofern geblockt. Zur Vollständigkeit der Darstellung ist in Figur 4c ferner ein einzelner Lichtstrahl S1 dargestellt, der an der als Lichteintrittsfläche wirkenden Begrenzungsseitenfläche 34 der Ausnehmung 32 in die Linse 3 hineingebrochen wird. Erkennbar ist die Seitenfläche 48 in der beschriebenen Ausführungsform in der Schnittdarstellung der Figur 4c senkrecht zur Längsrichtung so gekrümmt, dass für einen überwiegenden Anteil des an der Lichteintrittsfläche 34 eingekoppelten Lichtes eine einfache Totalreflexion erfolgt, wobei das Licht nach dieser Totalreflexion auf die Lichtauskoppelfläche 41 gelenkt wird, an welcher es wiederum in den zweiten Halbraum gelenkt wird.

Der Fachmann erkennt, dass die in den Figuren 4a bis 4c angegebenen Strahlenverläufe nur beispielhaft sind. Die beschriebene erfindungsgemäße Gestaltung der Linse 3 ist grundsätzlich derart ausgeführt, dass ein überwiegender Lichtanteil des von dem Leuchtmittel, insbesondere den LEDs, abgegebenen und an den Lichteinkoppelflächen in die Linse 3 eingekoppeltes Lichtes in den zweiten Halbraum gelenkt wird zur Erzielung der gewünschten asymmetrischen Lichtverteilung, die durch die Leuchte der Figur 1 zur Beleuchtung einer Wandtafel genutzt werden kann, während die Leuchte selbst an einem Deckenabschnitt des Raums angebracht sein kann, der sich benachbart zu dem Wandabschnitt befindet.

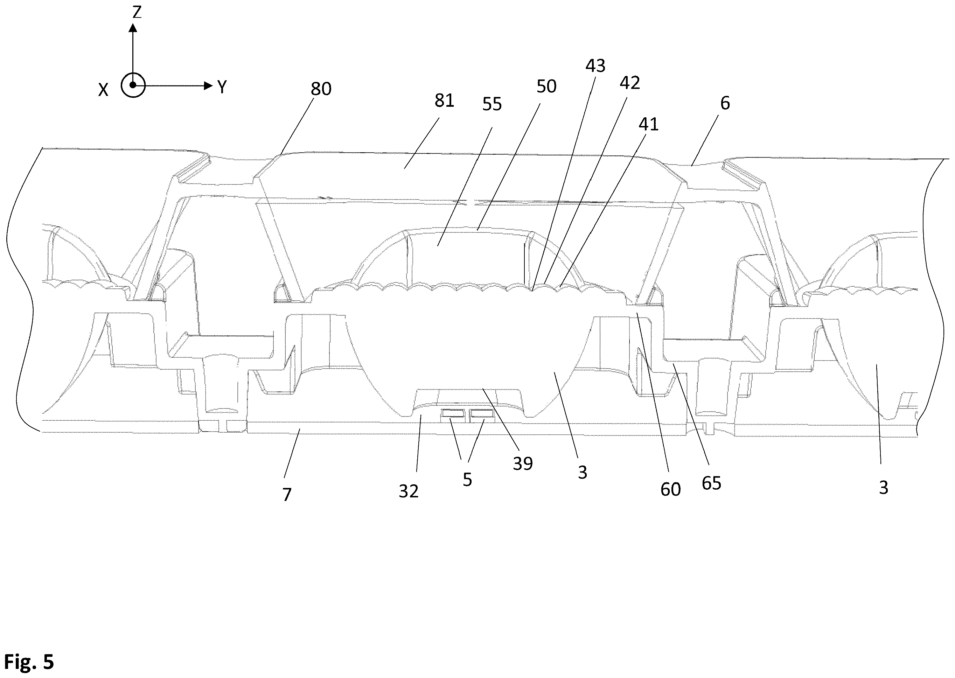

Figur 5 zeigt einen Ausschnitt der Leuchte der Figur 1 in einem Längsschnitt, d.h. in der ZY-Ebene im dargestellten Koordinatensystem. Die Schnittebene entspricht insofern der mit Bezug auf Figur 3 beschriebenen Ebene E, welche das Lichtmodul 2 bzw. die Linse 3 in zwei Abschnitte aufteilt, die in zwei durch die Ebene E getrennte Raumbereiche I, II fallen. Erkennbar kann sich der Vorsprung 50 im Wesentlichen über die gesamte optisch wirksame Längserstreckung der Linse 3. Aus der Darstellung geht der trichterförmige Aufbau der Blendenabschnitte der Blendenanordnung 6 hervor. Wie obenstehend dargestellt, verlaufen die Begrenzungsflächen der Ausnehmung 32 der Linse 3 über die Erstreckung der Ausnehmung in Längsrichtung (Y-Richtung) wie im Schnitt der Figur 3 dargestellt. Insofern verlaufen die Verbindungskanten 40, 39, 38 im Wesentlichen parallel zur Längsachse. Dies ist für die Verbindungskante 39 aus Figur 5 ersichtlich. Die Lichtauskoppelfläche 41, welche sich in Querrichtung an den an einem seitlichen Rand der Linse verlaufenden Vorsprung 50 anschließt, kann in der beschriebenen Ausführungsform eine Zylinderstrukturierung aufweisen mit Wellenbergen 42 und Wellentälern 43, welche das vom Leuchtmittel ausgehende Licht in Längsrichtung der Leuchte vergleichförmigt oder homogenisiert, siehe auch Fig. 2 aus welcher die in Längsrichtung periodische Strukturierung der Lichtauskoppelfläche in einer schrägen Aufsicht auf die Lichtauskoppelfläche 41 hervorgeht. In einer anderen Ausführungsform kann die in Längsrichtung periodische Mikrostrukturierung eine andere Gestaltung aufweisen, beispielsweise in Längsrichtung aufeinanderfolgende Prismen, beispielsweise mit dreieckiger Grundfläche.

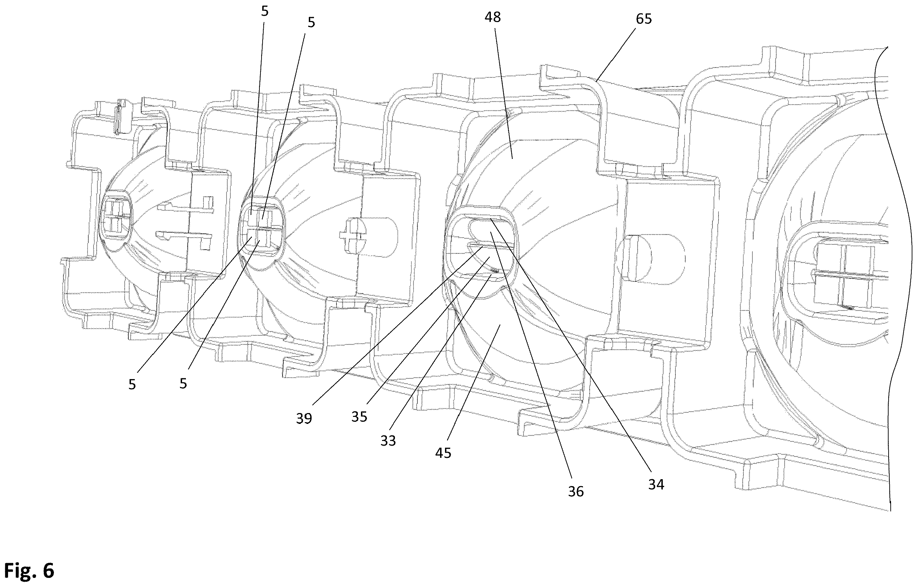

Figur 6 zeigt in einem Ausschnitt die Leuchte der Figur 1 in einer schrägen Unteransicht, wobei die Grundplatte 7 entfernt ist zur Bereitstellung einer Sicht auf die Unterseite des jeweiligen optischen Körpers 3. Ferner sind auch die Leuchtmittel 5 an einem der optischen Körper weggelassen zur Freigabe der Sicht auf die Begrenzungsflächen der Ausnehmung 32, siehe Figur 3. Erkennbar weisen insbesondere die Begrenzungsbodenflächen 35, 36, 37 sowie die beiden mit Bezug auf Figur 3 angegebenen Begrenzungsseitenflächen 33, 34 über die Erstreckung der Ausnehmung in Längsrichtung den im Schnitt der Figur 3 angegebenen Verlauf.

### Bezugszeichenliste

- 1: Leuchte
- 2: Lichtmodul
- 3: Linse, optischer Körper
- 5: LED, Leuchtmittel
- 6: Blendenanordnung
- 6a - 6c: Blendenabschnitt, Blendenelement, Designelement
- 7: Grundplatte
- 7a - 7c: Plattenabschnitt
- 30: Lichteinkoppelseite
- 31: Lichtauskoppelseite
- 32: Ausnehmung
- 33: Lichteintrittsfläche, Lichteinkoppelfläche, Begrenzungsseitenfläche
- 34: Lichteintrittsfläche, Lichteinkoppelfläche, Begrenzungsseitenfläche
- 35: Lichteintrittsfläche, Lichteinkoppelfläche, Begrenzungsbodenfläche
- 36: Lichteintrittsfläche, Lichteinkoppelfläche, Begrenzungsbodenfläche
- 37: Verbindungsfläche
- 38,39,40: Verbindungskante
- 41: Lichtauskoppelfläche
- 42: Wellenberg
- 43: Wellental
- 45: Totalreflektierende Seitenfläche
- 48: Einfach totalreflektierende Seitenfläche
- 50: Vorsprung
- 55: Lichtauskoppelfläche, Grenzfläche des Vorsprungs
- 57: Außenseitenfläche, Totalreflexionsfläche
- 60: Halteflansch
- 65: Halterahmen, Tragrahmen
- 80: Kante
- 81: Oberfläche
- I, II: Halbraum
- E: Ebene
- S1: Lichtstrahl
- X,: Querrichtung, Transversalrichtung
- Y,: Längsrichtung
- Z: Dickenrichtung, Vertikalrichtung

## Patentansprüche

1. Lichtmodul (2) zur Erzeugung einer vorgegebenen asymmetrischen Lichtverteilung umfassend ein Leuchtmittel sowie einen optischen Körper (3), insbesondere eine Linse zur Erzeugung einer vorgegebenen asymmetrischen Lichtverteilung, wobei der optische Körper umfasst
- eine Lichteinkoppelseite (30) mit zueinander gekippten Lichteinkoppelflächen (33, 34, 35, 36)zur Einkopplung von Licht eines Leuchtmittels,
- eine Lichtauskoppelseite (31) mit zueinander gekippten Lichtauskoppelflächen (41, 55) zur Auskopplung von an der Lichteinkoppelseite (30) eingekoppelten Lichtes, wobei
- die Lichteinkoppelflächen (33, 34, 35, 36) zumindest teilweise durch Begrenzungsflächen einer an der Lichteinkoppelseite (30) des optischen Körpers angeordneten Ausnehmung (32) bereitgestellt sind, wobei das Leuchtmittel (5) an der Lichteinkoppelseite (30) des optischen Körpers (3) zur Einstrahlung von Licht in der Ausnehmung (32) angeordnet ist und die Ausnehmung ausgebildet ist zum Aufnehmen von Lichtstrahlen des Leuchtmittels (5) und diese an den Lichteinkoppelflächen (33, 34, 35, 36) in den optischen Körper (3) hineinzubrechen, und wobei
- die Lichteinkoppelseite (30) und die Lichtauskoppelseite (31) durch eine gedachte Ebene (E) in jeweils zwei Abschnitte aufgeteilt sind, die in zwei durch die Ebene getrennten Raumbereichen (I, II) liegen;
- der optische Körper (3) in einem ersten der beiden Abschnitte einen die Lichteinkoppelseite (30) und die Lichtauskoppelseite (31) verbindenden und zum Betrieb als zweifach totalreflektierend wirkend ausgebildeten Seitenflächenabschnitt (45, 57) aufweist, der an der Lichtauskoppelseite (31) eine Außenseitenfläche (57) eines Vorsprungs (50) darstellt, und wobei der Vorsprung eine zu dieser Außenseitenfläche (57) gegenüberliegende Lichtauskoppelfläche (55) zur Auskopplung von im überwiegenden Anteil zweifach totalreflektiertem Licht aufweist, und die Lichtauskoppelfläche (55) ausgebildet ist zum Brechen von auskoppelndem Licht in Richtung des zweiten Halbraums (II), **dadurch gekennzeichnet, dass** das Modul ferner eine trichterförmige, dem optischen Körper optisch nachgeschaltete Blendeneinrichtung (6) aufweist, und die Blendeneinrichtung (6) an der Lichtauskoppelseite (31) des optischen Körpers (3) angeordnet ist, und im Betrieb ein Teil des an der Lichteinkoppelseite (30) des optischen Körpers (3) eingekoppelten Lichts des Leuchtmittels (5) an der zum Betrieb als zweifach totalreflektierend wirkend ausgebildeter Seitenflächenabschnitt (45, 57) zweifach totalreflektiert und zur Lichtauskoppelfläche (55) des Vorsprungs gelenkt ist, die ausgebildet ist, dieses auskoppelnde Licht so zu brechen, dass das Licht über eine Begrenzungskante (80) der Blendeneinrichtung (6) hinaus in den zweiten Halbraum (II) gelenkt ist.

2. Lichtmodul (2) nach Anspruch 1, **dadurch gekennzeichnet, dass** der optische Körper (3) im zweiten Abschnitt einen die Lichteinkoppelseite (30) und die Lichtauskoppelseite (31) verbindenden und zum Betrieb als einfach totalreflektierend wirkend ausgebildeter Seitenflächenabschnitt (48) aufweist, der ausgebildet ist, das an diesem einfach totalreflektierte Licht auf eine zugeordnete Lichtauskoppelfläche (55) zu lenken zur Auskopplung von einfach totalreflektiertem Licht und zum Brechen eines überwiegenden Anteils dieses Lichtes in den zweiten Halbraum (II).

3. Lichtmodul (2) nach Anspruch 1 oder 2, **dadurch gekennzeichnet, dass** die Begrenzungsflächen der Ausnehmung (32) Begrenzungsseitenflächen und Begrenzungsbodenflächen umfassen, wobei eine erste, dem zweifach totalreflektierend wirkenden Seitenflächenabschnitt (45, 57) als Lichteinkoppelfläche zugeordnete Begrenzungsseitenfläche (33) der Ausnehmung (32) und eine zweite, dem einfach totalreflektierend wirkenden Seitenflächenabschnitt (48) als Lichteinkoppelfläche zugeordnete Begrenzungsseitenfläche (34) der Ausnehmung (32) vorgesehen ist.

4. Lichtmodul (2) nach einem der Ansprüche 1 bis 3, **dadurch gekennzeichnet, dass** die Begrenzungsflächen der Ausnehmung (32) zumindest eine als Lichteinkoppelfläche ausgebildete Begrenzungsbodenfläche (35, 36) aufweist, welche ausgebildet ist, im Betrieb an der zumindest einen Begrenzungsbodenfläche eingekoppeltes Licht mittels Brechung auf eine zugeordnete Lichtauskoppelfläche (41) zu lenken, von welcher Licht überwiegend in den zweiten, den Vorsprung des optischen Körpers (3) nicht aufnehmenden Raumbereich (II) gebrochen ist.

5. Lichtmodul (2) nach Anspruch 4, **dadurch gekennzeichnet, dass** die Begrenzungsflächen der Ausnehmung (32) zumindest zwei als Lichteinkoppelflächen ausgebildete und zueinander verkippte Begrenzungsbodenflächen (35, 36) aufweisen, welche durch eine Verbindungsfläche (37) miteinander verbunden sind und welche ausgebildet sind, an den zumindest zwei Begrenzungsbodenflächen in den optischen Körper (3) eintretendes Licht mittels Brechung auf eine zugeordnete Lichtauskoppelfläche (41) an der Lichtauskoppelseite (31) zu lenken, von welcher Licht überwiegend in den zweiten Raumbereich (II) gebrochen wird.

6. Lichtmodul (2) nach Anspruch 5, **dadurch gekennzeichnet, dass** ein Profil der beiden Begrenzungsbodenflächen (35, 36) in einem Schnitt etwa senkrecht zur gedachten Ebene (E) und senkrecht zu einer Längsrichtung (Y) über eine überwiegende Erstreckung der Ausnehmung (32) in Längsrichtung (Y) im Wesentlichen konstant ist.

7. Lichtmodul (2) nach Anspruch 5 oder 6, **dadurch gekennzeichnet, dass** die Verbindungsfläche (37) zwischen den beiden Begrenzungsbodenflächen (35, 36) in einem Schnitt etwa senkrecht durch die gedachte Ebene und senkrecht durch eine Längsrichtung ein lokales Minimum und ein lokales Maximum bezüglich der Erstreckung der Ausnehmung (32) in eine Dickenrichtung (Z) des optischen Körpers (3) aufweist.

8. Lichtmodul (2) nach einem der Ansprüche 1 bis 7, **dadurch gekennzeichnet, dass** der Vorsprung (50) in einer Ebene senkrecht zur gedachten Ebene (E) und parallel zu einer Längserstreckung (Y) des optischen Körpers (3) gekrümmt ist zur Strahlauffächerung in Längsrichtung des optischen Körpers (3).

9. Lichtmodul (2) nach einem der Ansprüche 1 bis 8, **dadurch gekennzeichnet, dass** die Außenseitenfläche (57) und/oder die Lichtauskoppelfläche (55) des Vorsprungs (50) in einer Ebene senkrecht zur gedachten Ebene (E) und senkrecht zu einer Längserstreckung gekrümmt ist zur Strahlauffächerung in Vertikalrichtung (Z) des optischen Körpers (3).

10. Lichtmodul (2) nach einem der Ansprüche 2 bis 9, **dadurch gekennzeichnet, dass** die dem einfach totalreflektierend wirkenden Seitenflächenabschnitt (48) zugeordnete Lichtauskoppelfläche (41), die dem zumindest einen Begrenzungsbodenabschnitt zugeordnete Lichtauskoppelfläche (41) und/oder die den zumindest zwei Begrenzungsbodenabschnitten (35, 36) zugeordnete Lichtauskoppelfläche (41) eine Oberflächenstrukturierung aufweist, insbesondere eine Wellenstruktur, wobei die Ausrichtung der Wellentäler (43) bzw. Wellenberge (42) im Wesentlichen senkrecht zur Längserstreckung (Y) erfolgt.

11. Lichtmodul (2) nach einem der Ansprüche 2 bis 10, **dadurch gekennzeichnet, dass** die dem einfach totalreflektierend wirkenden Seitenflächenabschnitt (48) zugeordnete Lichtauskoppelfläche (55) und die dem zumindest einen Begrenzungsbodenabschnitt zugeordnete Lichtauskoppelfläche (41) oder die den zumindest zwei Begrenzungsbodenabschnitten (35, 36) zugeordnete Lichtauskoppelfläche (41) eine im Wesentlichen gleichmäßig strukturierte und verlaufende Oberfläche an der Lichtauskoppelseite (31) des optischen Körpers (3) bilden, die in einer Verbindungsrichtung (Dickenrichtung) zum Verbinden der Lichteinkoppelseite (30) und der Lichtauskoppelseite (31) durch den Vorsprung (50) überragt ist.

12. Lichtmodul (2) zur Erzeugung einer vorgegebenen asymmetrischen Lichtverteilung nach einem der Ansprüche 1 bis 11, **dadurch gekennzeichnet, dass** die Lichteinkoppelseite (30) des optischen Körpers (3) im Bereich eines Bodenabschnittes der Blendeneinrichtung angeordnet ist und der Vorsprung des optischen Körpers zumindest zu 1/4, insbesondere mindestens zu 1/3 einer Höhe der trichterförmigen Blendeneinrichtung (6) in diese hineinragt.

13. Lichtmodul (2) zur Erzeugung einer vorgegebenen asymmetrischen Lichtverteilung nach einem der Ansprüche 11 bis 12, **dadurch gekennzeichnet, dass** das Leuchtmittel eine Mehrzahl von in Transversalrichtung (X) und/oder in Längsrichtung (Y) angeordnete LEDs (5) aufweist.

14. Lichtsystem zur Erzeugung einer vorgegebenen asymmetrischen Lichtverteilung, **dadurch gekennzeichnet, dass** das System eine Mehrzahl von in Reihe oder als Array in einem vorgegebenen Raster angeordnete Lichtmodule (2) nach einem der Ansprüche 1 bis 13 aufweist.

## Claims

1. Light module (2) for generating a predetermined asymmetrical light distribution, comprising an illuminant and an optical body (3), in particular a lens for generating a predetermined asymmetrical light distribution, the optical body comprising
- a light coupling side (30) with light coupling surfaces (33, 34, 35, 36) tilted towards each other for coupling light from an illuminant,
- a light decoupling side (31) with light decoupling surfaces (41, 55) tilted towards each other for decoupling light coupled at the light coupling side (30), wherein
- the light coupling surfaces (33, 34, 35, 36) are provided at least partially by boundary surfaces of a recess (32) arranged on the light coupling side (30) of the optical body, wherein the illuminant (5) is arranged on the light coupling side (30) of the optical body (3) for the irradiation of light in the recess (32) and the recess is designed to receive light rays from the illuminant (5) and to refract these into the optical body (3) at the light coupling surfaces (33, 34, 35, 36), and wherein
- the light coupling side (30) and the light decoupling side (31) are each divided by an imaginary plane into two sections which lie in two spatial regions (I, II) separated by the plane;
- the optical body (3) has, in a first of the two sections, a side surface section (45, 57) which connects the light coupling side (30) and the light decoupling side (31) and which is designed for operation in which it acts doubly totally reflecting, which side surface section represents, on the light decoupling side (31), an outside surface (57) of a projection (50), and wherein the projection has a light decoupling surface (55) opposite this outside surface (57) for decoupling light which is predominantly doubly totally reflected, and the light decoupling surface (55) is designed to refract decoupled light in the direction of the second half-space (II), **characterized in that** the module further has a funnel-shaped aperture device (6) which is optically downstream of the optical body, and the aperture device (6) is arranged on the light decoupling side (31) of the optical body (3) and, during operation, part of the light from the illuminant (5) which is coupled at the light coupling side (30) of the optical body (3) is doubly totally reflected on the side surface section (45, 57) which is designed to act doubly totally reflecting for operation and is directed to the light decoupling surface (55) of the projection, which light decoupling surface is designed to refract this decoupled light in such a way that the light is directed beyond a limiting edge (80) of the aperture device (6) into the second half-space (II).

2. Light module (2) according to claim 1, **characterized in that** the optical body (3) has, in the second section, a side surface section (48) which connects the light coupling side (30) and the light decoupling side (31) and is designed for operation in which it acts singly totally reflecting and is designed to direct the light which is singly totally reflected on this side surface onto an associated light decoupling surface (55) for decoupling singly totally reflected light and for refracting a predominant part of this light into the second half-space (II) .

3. Light module (2) according to claim 1 or 2, **characterized in that** the boundary surfaces of the recess (32) comprise boundary side surfaces and boundary bottom surfaces, wherein there are provided a first boundary side surface (33) of the recess (32) which is assigned as a light coupling surface to the side surface section (45, 57) acting doubly totally reflecting, and a second boundary side surface (34) of the recess (32) which is assigned as a light coupling surface to the side surface section (48) acting singly totally reflecting.

4. Light module (2) according to any one of claims 1 to 3, **characterized in that** the boundary surfaces of the recess (32) have at least one boundary bottom surface (35, 36) which is designed as a light coupling surface and which is designed to direct light coupled at the at least one boundary bottom surface during operation by means of refraction onto an associated light decoupling surface (41) from which light is predominantly refracted into the second spatial region (II) which does not receive the projection of the optical body (3).

5. Light module (2) according to claim 4, **characterized in that** the boundary surfaces of the recess (32) have at least two boundary bottom surfaces (35, 36) which are designed as light coupling surfaces, are tilted relative to one another, are connected to one another by a connecting surface (37) and are designed to direct light entering the optical body (3) at the at least two boundary bottom surfaces by means of refraction onto an associated light decoupling surface (41) on the light decoupling side (31) from which light is predominantly refracted into the second space (II).

6. Light module (2) according to claim 5, **characterized in that** a profile of the two boundary bottom surfaces (35, 36) in a section approximately perpendicular to the imaginary plane (E) perpendicular to a longitudinal direction (Y) is essentially constant over a predominant extension of the recess (32) in the longitudinal direction (Y).

7. Light module (2) according to claim 5 or 6, **characterized in that** the connecting surface (37) between the two boundary bottom surfaces (35, 36) in a section approximately perpendicular through the imaginary plane and perpendicular through a longitudinal direction has a local minimum and a local maximum with respect to the extension of the recess (32) in a thickness direction (Z) of the optical body (3).

8. Light module (2) according to any one of claims 1 to 7, **characterized in that** the projection (50) is curved in a plane perpendicular to the imaginary plane (E) and parallel to a longitudinal extension (Y) of the optical body (3), for beam fan-out in the longitudinal direction of the optical body (3).

9. Light module (2) according to any one of claims 1 to 8, **characterized in that** the outside surface (57) and/or the light decoupling surface (55) of the projection (50) is curved in a plane perpendicular to the imaginary plane (E) and perpendicular to a longitudinal extension, for beam fan-out in the vertical direction (Z) of the optical body (3).

10. Light module (2) according to any one of claims 2 to 9, **characterized in that** the light decoupling surface (41) assigned to the side surface section (48) acting singly totally reflecting, the light decoupling surface (41) assigned to the at least one boundary bottom section and/or the light decoupling surface (41) assigned to the at least two boundary bottom sections (35, 36) has a surface texturing, in particular a wave structure, the orientation of the wave troughs (43) or wave crests (42) being essentially perpendicular to the longitudinal extension (Y).

11. Light module (2) according to any one of claims 2 to 10, **characterized in that** the light decoupling surface (55) assigned to the side surface section (48) which acts singly totally reflecting and the light decoupling surface (41) assigned to the at least one boundary bottom section or the light decoupling surface (41) assigned to the at least two boundary bottom sections (35, 36) form a substantially uniformly textured and extending surface on the light decoupling side (31) of the optical body (3) which is surpassed by the projection (50) in a connecting direction (thickness direction) for connecting the light coupling side (30) and the light decoupling side (31).

12. Light module (2) for generating a predetermined asymmetrical light distribution according to any one of claims 1 to 11, **characterized in that** the light coupling side (30) of the optical body (3) is arranged in the region of a bottom section of the aperture device and the projection of the optical body projects into the funnel-shaped aperture device (6) at least 1/4, in particular at least 1/3, of a height of the latter.

13. Light module (2) for generating a predetermined asymmetrical light distribution according to any one of claims 11 to 12, **characterized in that** the illuminant comprises a plurality of LEDs (5) arranged in the transverse direction (X) and/or in the longitudinal direction (Y).

14. Lighting system for generating a predetermined asymmetrical light distribution, **characterized in that** the system has a plurality of light modules (2) arranged in series or as an array in a predetermined grid according to one of claims 1 to 13.

## Revendications

1. Module d'éclairage (2) pour générer une distribution lumineuse asymétrique prédéterminée, comprenant un illuminant et un corps optique (3), en particulier une lentille pour générer une distribution lumineuse asymétrique prédéterminée, le corps optique comprenant
- un côté de couplage de lumière (30) avec des surfaces de couplage de lumière (33, 34, 35, 36) inclinées l'une vers l'autre pour coupler la lumière provenant d'un illuminant,
- un côté de découplage de lumière (31) avec des surfaces de découplage de lumière (41, 55) inclinées l'une vers l'autre pour découpler la lumière couplée au côté de couplage de lumière (30), dans lequel
- les surfaces de couplage de lumière (33, 34, 35, 36) sont fournies au moins partiellement par des surfaces de délimitation d'un évidement (32) disposé sur le côté de couplage de lumière (30) du corps optique, dans lequel l'illuminant (5) est disposé sur le côté de couplage de lumière (30) du corps optique (3) pour l'irradiation de la lumière dans l'évidement (32) et l'évidement est conçu pour recevoir des rayons lumineux de l'illuminant (5) et pour les réfracter dans le corps optique (3) au niveau des surfaces de couplage de lumière (33, 34, 35, 36), et dans lequel
- le côté de couplage de lumière (30) et le côté de découplage de lumière (31) sont chacun divisés par un plan imaginaire en deux sections qui se trouvent dans deux domaines spatiales (I, II) séparés par le plan;
- le corps optique (3) comporte, dans une première des deux sections, une section de surface latérale (45, 57) qui relie le côté de couplage de lumière (30) et le côté de découplage de lumière (31) et qui est conçue pour fonctionner de manière à double réflexion totale, section de surface latérale qui représente sur le côté de découplage de lumière (31) une surface externe (57) d'une saillie (50), et dans lequel la saillie présente une surface de découplage de lumière (55) opposée à cette surface externe (57) pour découpler la lumière qui est principalement totalement réfléchie doublement, et la surface de découplage de lumière (55) est conçue pour réfracter la lumière découplée dans la direction du second demi-espace (II), **caractérisé en ce que** le module comporte en outre un dispositif de diaphragme en forme d'entonnoir (6) qui est optiquement en aval du corps optique, et le dispositif de diaphragme (6) est disposé sur le côté de découplage de lumière (31) du corps optique (3) et, pendant le fonctionnement, une partie de la lumière provenant de l'illuminant (5) qui est couplée au côté de couplage de lumière (30) du corps optique (3) est totalement réfléchie doublement par la section de la surface latérale (45, 57) qui est conçue pour fonctionner de manière à double réflexion totale et est dirigée vers la surface de découplage de lumière (55) de la saillie, surface de découplage de lumière qu'est conçue pour réfracter cette lumière découplée de manière à ce que la lumière soit dirigée au-delà d'un bord limite (80) du dispositif de diaphragme (6) dans le second demi-espace (II).

2. Module d'éclairage (2) selon la revendication 1, **caractérisé en ce que** le corps optique (3) comporte, dans la deuxième section, une section de surface latérale (48) qui relie le côté de couplage de lumière (30) et le côté de découplage de lumière (31) et qui est conçue pour fonctionner de manière à réflexion totale simple et qui est conçue pour diriger la lumière totalement réfléchie une fois par cette surface latérale sur une surface de découplage de lumière associée (55) pour découpler la lumière totalement réfléchie une fois et pour réfracter une partie prédominante de cette lumière dans le deuxième demi-espace (II).

3. Module d'éclairage (2) selon la revendication 1 ou 2, **caractérisé en ce que** les surfaces de délimitation de l'évidement (32) comprennent des surfaces latérales de délimitation et des surfaces inférieures de délimitation, une première surface latérale de délimitation (33) de l'évidement (32) étant affectée en tant que surface de couplage de lumière à la section de surface latérale (45, 57) qui agit de manière à réflexion totale double, et une deuxième surface latérale de délimitation (34) de l'évidement (32) étant affectée en tant que surface de couplage de lumière à la section de surface latérale (48) qui agit de manière à réflexion totale simple, étant prévues.

4. Module d'éclairage (2) selon l'une quelconque des revendications 1 à 3, **caractérisé en ce que** les surfaces de délimitation de l'évidement (32) présentent au moins une surface inférieure de délimitation (35, 36) conçue comme surface de couplage de lumière et conçue pour diriger, pendant le fonctionnement, la lumière couplée à ladite au moins une surface inférieure de délimitation (41) par réfraction sur une surface de découplage de lumière associée (41) à partir de laquelle la lumière est principalement réfractée dans le deuxième domaine spatiale (II) qui ne reçoit pas la saillie du corps optique (3).

5. Module d'éclairage (2) selon la revendication 4, **caractérisé en ce que** les surfaces de délimitation de l'évidement (32) présentent au moins deux surfaces inférieures de délimitation (35, 36) qui sont conçues comme des surfaces de couplage de lumière et sont inclinées l'une par rapport à l'autre et qui sont reliées l'une à l'autre par une surface de connexion (37) et sont conçues pour diriger la lumière entrant dans le corps optique (3) au niveau des au moins deux surfaces inférieures de délimitation par réfraction sur une surface de découplage de lumière associée (41) sur le côté de découplage de lumière (31) à partir de laquelle la lumière est principalement réfractée dans le deuxième domaine spatial (II).

6. Module d'éclairage (2) selon la revendication 5, **caractérisé en ce qu'**un profil des deux surfaces inférieures de délimitation (35, 36) dans une section approximativement perpendiculaire au plan imaginaire (E) perpendiculaire à une direction longitudinale (Y) est essentiellement constant sur une extension prédominante de l'évidement (32) dans la direction longitudinale (Y).

7. Module d'éclairage (2) selon la revendication 5 ou 6, **caractérisé en ce que** la surface de liaison (37) entre les deux surfaces inférieures de délimitation (35, 36) dans une section approximativement perpendiculaire au plan imaginaire et perpendiculaire à la direction longitudinale présente un minimum local et un maximum local par rapport à l'extension de l'évidement (32) dans une direction d'épaisseur (Z) du corps optique (3).

8. Module d'éclairage (2) selon l'une quelconque des revendications 1 à 7, **caractérisé en ce que** la saillie (50) est incurvée dans un plan perpendiculaire au plan imaginaire (E) et parallèle à une extension longitudinale (Y) du corps optique (3), pour élargir en éventail les faisceaux dans la direction longitudinale du corps optique (3).

9. Module d'éclairage (2) selon l'une quelconque des revendications 1 à 8, **caractérisé en ce que** la surface externe (57) et/ou la surface de découplage de lumière (55) de la saillie (50) est incurvée dans un plan perpendiculaire au plan imaginaire (E) et perpendiculaire à une extension longitudinale, pour élargir en éventail les faisceaux dans la direction verticale (Z) du corps optique (3).

10. Module d'éclairage (2) selon l'une quelconque des revendications 2 à 9, **caractérisé en ce que** la surface de découplage de lumière (41) affectée à la section de surface latérale (48) qui agit de manière à réflexion total simple, la surface de découplage de lumière (41) affectée à ladite au moins une section inférieure de délimitation et/ou la surface de découplage de lumière (41) affectée aux au moins deux sections inférieures de délimitation (35, 36) présentent une texturation de surface, en particulier une structure ondulatoire, l'orientation des creux d'ondes (43) ou des crêtes d'ondes (42) étant essentiellement perpendiculaire à l'extension longitudinale (Y).

11. Module d'éclairage (2) selon l'une quelconque des revendications 2 à 10, **caractérisé en ce que** la surface de découplage de lumière (55) affectée à la section de surface latérale (48) qui agit de manière à réflexion totale simple et la surface de découplage de lumière (41) affectée à au moins une section inférieure de délimitation ou la surface de découplage de lumière (41) affectée à au moins deux sections inférieures de délimitation (35, 36) forment une surface texturée et étendue sensiblement uniforme sur le côté de découplage de lumière (31) du corps optique (3), surface qui est dépassée par la saillie (50) dans une direction de connexion (direction de l'épaisseur) pour connecter le côté de couplage de lumière (30) et le côté de découplage de lumière (31).

12. Module d'éclairage (2) pour générer une distribution lumineuse asymétrique prédéterminée selon l'une quelconque des revendications 1 à 11, **caractérisé en ce que** le côté de couplage de lumière (30) du corps optique (3) est disposé dans la zone d'une section inférieure du dispositif de diaphragme et que la saillie du corps optique fait saillie dans le dispositif de diaphragme en forme d'entonnoir (6) d'au moins 1/4, en particulier d'au moins 1/3, d'une hauteur de ce dernier.

13. Module d'éclairage (2) pour générer une distribution lumineuse asymétrique prédéterminée selon l'une quelconque des revendications 11 à 12, **caractérisé en ce que** l'illuminant comprend une pluralité de DEL (5) disposées dans la direction transversale (X) et/ou dans la direction longitudinale (Y).

14. Système d'éclairage pour générer une distribution lumineuse asymétrique prédéterminée, **caractérisé en ce que** le système comporte une pluralité de modules d'éclairage (2) disposés en série ou en réseau dans une grille prédéterminée selon l'une des revendications 1 à 13.
